# EUROPÄISCHE PATENTSCHRIFT

(11) **EP 4 148 514 B1**
(45) Veröffentlichungstag und Bekanntmachung des Hinweises auf die Patenterteilung: **21.05.2025**
(21) Anmeldenummer: 22195092.6
(22) Anmeldetag: 12.09.2022
(51) Int. Cl.: G05B 19/042, G05B 19/05

(54) **INTEGRIERTES DIAGNOSESYSTEM FÜR SPS-BASIERTE FERNWIRK-AUSSENSTATIONEN**
INTEGRATED DIAGNOSTIC SYSTEM FOR SPS-BASED TELECONTROL EXTERNAL STATIONS
SYSTÈME INTÉGRÉ DE DIAGNOSTIC POUR STATIONS DE SORTIE DE COMMANDE À DISTANCE BASÉS SUR LA COMMANDE À MÉMOIRE PROGRAMMABLE (SPS)

(30) Priorität: 13.09.2021 LU 500646
(43) Veröffentlichungstag der Anmeldung: 15.03.2023
(73) Patentinhaber: PHOENIX CONTACT GmbH & Co. KG, 32825 Blomberg (DE)
(72) Erfinder: Lange, Andreas, 31737 Rinteln (DE); Würger, Andreas, 30853 Langenhagen (DE)
(74) Vertreter: LifeTech IP Spies & Behrndt Patentanwälte PartG mbB

(56) Entgegenhaltungen:
- EP-A1- 2 073 083
- US-A1- 2006 100 797

## Beschreibung

Die Erfindung betrifft eine Technik zur Bereitstellung einer Diagnosefunktionalität für eine auf einer speicherprogrammierbaren Steuerung basierenden Anwendung, vorzugsweise für eine auf einer speicherprogrammierbaren Steuerung basierenden Fernwirk-Außenstation.

Eine speicherprogrammierbare Steuerung (SPS, englisch: programmable logic controller, PLC) ist ein Gerät, das zur Steuerung oder Regelung einer Maschine oder Anlage eingesetzt und auf digitaler Basis programmiert wird. Derartige Maschinen oder Anlagen mit mindestens einer SPS werden z. B. als automatisierungstechnische Anlage bezeichnet. Zur Programmierung der SPS sind aus der Praxis eine Vielzahl unterschiedlicher SPS-Engineering-Werkzeuge und Frameworks bekannt.

Die Europäische Norm EN 61131, die auf der internationalen Norm IEC 61131 basiert, befasst sich mit den Grundlagen speicherprogrammierbarer Steuerungen. Die Norm IEC61131-3 (auch DIN EN 61131-3) ist ein internationaler Standard für Programmiersprachen von SPSen. Ihr Ziel besteht in der Standardisierung der Programmierung der Steuerungssoftware für SPSen. Dabei sollen Programmiersprachen herstellerunabhängig in einem einheitlichen Organisationskonzept (POE - Programm-Organisationseinheiten) mit der Pflicht zur Variablendeklaration unter Verwendung von elementaren und abgeleiteten Datentypen angewendet werden. Die Norm EN 61131-3 legt die Syntax und Semantik einer vereinheitlichten Reihe von Programmiersprachen für SPSen fest.

Die IEC-61131-konformen Programmiersprachen bieten eine hohe Anzahl an Freiheitsgraden, die dem Techniker die Möglichkeit bieten, das Steuerungsprogramm gemäß seinen Vorstellungen zu realisieren und Zusatzfunktionen, z. B. komplexe Logiken, vorzusehen.

Daher werden vermehrt auch die Steuerungen von Fernwirk-Außenstationen (englisch: remote terminal unit, RTU) mittels der IEC-61131-konformen Programmiersprachen erstellt. Eine RTU dient ebenfalls zur Steuerung oder Regelung einer Maschine oder Anlage und wird auf digitaler Basis programmiert, wobei die RTU ferner für große Distanzen zu einer Leitstation und robuster gegenüber äußeren Einflüssen, z. B. hoher Temperatur und/oder Feuchtigkeit, ausgelegt sein können. Üblicherweise werden RTU herstellerabhängig programmiert.

Neben den Steuerprogrammen für SPSen bzw. RTUs ist ferner bekannt, zusätzlich Diagnosefunktionalitäten vorzusehen, um Fehler zu protokollieren und auszugeben, die bei der Programmierung einer SPS bzw. RTU, d.h. bei der Erstellung des entsprechenden Steuerungsprogramms, oder im Betrieb der SPS bzw. RTU auftreten.

Diagnosefunktionalitäten in Form von Textmeldesystemen sind heute meist in SPS-Engineering-Werkzeugen oder Visualisierungen integriert. Bei Visualisierungen handelt es sich z. B. um eine Mensch-Maschinen-Schnittstelle der automatisierungstechnischen Anlage bzw. zur Visualisierung des Steuerungsvorgangs der SPS, d. h. um eine grafische Oberfläche zur Überwachung und/oder Steuerung der SPS, z. B. an einer entfernten Leitstation.

Im SPS-Engineering-Werkzeug finden sich z. B. Logging-Mechanismen, mit denen sich Daten live aus dem laufenden Steuerungsprogramm mitschneiden lassen. Im Visualisierungs-Engineering finden sich Alarm-Managementsysteme, in denen Alarm-Ereignisse definiert werden. Bei Auftreten dieser Alarm-Ereignisse werden Textmeldungen auf der entsprechenden Visualisierung ausgegeben. Diese bekannten Diagnosefunktionalitäten haben jedoch verschiedene Nachteile.

So muss zur Anzeige der Textmeldungen entweder das SPS-Engineering-Werkzeug oder die Visualisierung aufgerufen werden. Muss das SPS-Engineering-Werkzeug oder eine spezielle Visualisierungssoftware aufgerufen werden, ist dies ein Nachteil, da diese Software nicht auf jedem Rechnersystem installiert ist. Muss die Visualisierung z. B. in Form einer Web-Visualisierung aufgerufen werden, ist dies ggf. ein Nachteil, da nicht jeder Browser die benötigten Technologien, z. B. Java, etc., unterstützt und/oder nicht jede Firmen-IT-Sicherheitsrichtlinie die Aktivierung der benötigten Technologien zulässt.

Das Dokument US 2006/100797 A1 beschreibt ein System zur Verwendung bei der Steuerung eines Prozesses in einem Unternehmen und zur Bereitstellung einer Zustandsdiagnose einer Maschine im Unternehmen.

Das Dokument EP 2 073 083 A1 betrifft ein Verfahren zur Programmierung und Diagnose einer speicherprogrammierbaren Steuerung (SPS). Derartige Steuerungen werden in der Automatisierung verwendet, um in Maschinen und Anlagen Verfahrensabläufe zu steuern bzw. um einzelne Antriebe dieser Anlagen anzusteuern.

Als Teil der SPS -Engineering-Werkzeuge oder der Visualisierungen sind die bekannten-Diagnosefunktionalitäten ferner herstellerabhängig. Daher ist eine Integration in herstellerunabhängig definierten IEC-61131-Code, z. B. als PLCopen XML, nicht möglich.

Ferner sind die bekannten Diagnosefunktionalitäten üblicherweise jeweils nur für eine Lebensphase des SPS-Programms, d.h. bei Erstellung oder im Betrieb, relevant, und/oder laufen nicht direkt im Echtzeitsystem, wodurch zyklusgenaues Logging meist nicht möglich ist.

Es ist eine daher Aufgabe der Erfindung, eine verbesserte Technik zur Bereitstellung einer Diagnosefunktionalität für eine auf einer SPS basierenden Anwendung, vorzugsweise für eine auf einer SPS basierenden RTU, bereitzustellen, mit der Nachteile herkömmlicher Ansätze vermieden werden können. Die Aufgabe der Erfindung ist es insbesondere, eine solche Technik bereitzustellen, die eine vereinfachte Erstellung der Diagnosefunktionalität und einen flexibleren Einsatz der erstellten Diagnosefunktionalität ermöglicht.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Unter dem Begriff IEC-61131-Framework wird vorliegend ein Programmiergerüst verstanden, das für den Techniker einen vorprogrammierten Rahmen bereitstellt, innerhalb dessen dieser eine anwendungsspezifische zu der Norm IEC 61131-3 konforme Programmierung eines Steuerungsprogramms erstellen kann. Ein derartiges Framework wird in der Praxis und in diesem Dokument auch als Programmiergerüst zur Erstellung einer Steuerung einer speicherprogrammierbaren Steuerung (SPS) bzw. einer auf einer speicherprogrammierbaren Steuerung basierenden Fernwirk-Außenstation (RTU) bezeichnet. Ein solches Framework (Programmiergerüst) ist und/oder umfasst Sammlungen von Codestücken, vorgefertigten Programmgerüsten, Funktionen, Funktionsbausteinen, etc. mit denen eine Programmieraufgabe schneller gelöst werden kann. Vorliegend wird ein solches IEC-61131-Framework bereitgestellt, dass ferner zur Erstellung einer Diagnosefunktionalität ausgebildet ist.

Ein derartiges Framework stellt somit ein Programmiergerüst für die Applikationsentwicklung für SPSen allgemein dar. Einzelne Funktionen, Elemente und Bausteine sind bereits im Framework (Programmiergerüst) enthalten oder vorprogrammiert, die in diesem Dokument als Funktionsbausteine bezeichnet sind, und müssen deshalb nicht immer wieder neu programmiert werden und können bei der Entwicklung verschiedenster Steuerungsprogramme und Diagnosefunktionalitäten wiederverwendet werden. Das vereinfacht die Arbeit des Technikers nachhaltig und verbessert den Nutzen, die Effizienz, Schnelligkeit, Fehlerfreiheit, und Qualität etc.

Das Steuerungsprogramm für eine SPS kann somit anhand der im Framework enthaltenen Funktionsbausteinen modular aufgebaut sein. Steuerungs-Funktionsbausteine, welche für die Steuerung der Maschine mittels der SPS relevant sind, können vom Techniker ausgewählt, gegebenenfalls konfiguriert (parametrisiert) und instanziiert werden. Den einzelnen instanziierten Steuerungs-Funktionsbausteinen können einzelne Funktionen zur Überwachung, Steuerung und/oder Regelung der Maschine zukommen. Die SPS ist üblicherweise z. B. mit Sensoren und Aktoren an der Maschine angebunden. Die Sensoren sind an die Eingänge der SPS geschaltet und übermitteln u.a. Zustandsparameter der Maschine an die SPS, wobei die Sensoren z. B. Temperaturfühler, Füllstandsensoren oder Positionssensoren sein können. Die Aktoren, welche jeweils zur Bewegungssteuerung eines oder mehrerer Maschinenbauteile ausgebildet sind, sind an den Ausgängen der SPS angeschlossen und können mittels des Steuerungsprogramms angesteuert werden. Aktoren sind z. B. ansteuerbare Ventile für Hydraulik oder Druckluft, oder Komponenten für Antriebssteuerungen, beispielsweise Drehzahl- oder Schrittmotorsteuerungen.

Wird in diesem Dokument von Diagnosefunktionalität oder Diagnosesystem gesprochen, ist eine Textmeldefunktionalität oder ein Textmeldesystem im Kontext speicherprogrammierbarer Steuerungen (SPSen) gemeint. Eine solche Funktionalität bzw. ein solches System stellt Textmeldungen mit Zusatzinformationen (z. B. Zeitstempel) zu Diagnosezwecken bereit. Inhalt der Textmeldungen sind Diagnoseinformationen aus dem laufenden IEC-61131-Programm.

Die Diagnosefunktionalität dient somit zur Überwachung von Vorgängen der SPS, z. B. von Daten und/oder Signalen, die durch einen instanziierten Steuerungs-Funktionsbaustein von der Maschine oder einem anderen instanziierten Steuerungs-Funktionsbaustein empfangen werden, die von dem instanziierten Steuerungs-Funktionsbaustein verarbeitet bzw. erzeugt werden, und/oder die von dem instanziierten Steuerungs-Funktionsbaustein an die Maschine oder an ein anderes instanziierten Steuerungs-Funktionsbaustein gesendet werden.

Ähnlich wie das Steuerungsprogramm der SPS kann auch die Diagnosefunktionalität mittels Funktionsbausteinen des Frameworks erstellbar sein. Die Funktionsbausteine können im instanziierten Zustand konfigurierbare und/oder konfigurierte Diagnosefunktionen (Unterfunktionen) bereitstellen, die in diesem Dokument als Nachrichtenelemente bezeichnet werden. Diese Diagnosefunktionen (Unterfunktionen) sind vorzugsweise jeweils derart ausgebildet (konfiguriert), mit einem oder mehreren Steuerungs-Funktionsbaustein zu interagieren, die oben genannten Daten und/oder Signalen auslesen und entsprechende Diagnoseinformationen erstellen zu können. Die Diagnosefunktionalität kann vorsehen, relevante Informationen aus den ausgelesenen Daten und/oder Signalen herauszufiltern, z. B. wenn bei der Datenerzeugung durch eine instanziierte Steuerungs-Funktionsbaustein eine Fehlermeldung aufgetreten ist bzw. fehlerhafte Daten erzeugt wurden, oder wenn ein empfangener Zustandsparameter der Maschine außerhalb eines vorbestimmten Bereichs liegt. Die ausgelesenen und gegebenenfalls herausgefilterten Daten und/oder Signale warden aufbereitet, um anschließend einem Benutzer der SPS angezeigt werden zu können. Anhand dieser Informationen kann der Benutzer feststellen, ob mögliche SPS-interne Probleme oder Probleme der Maschine vorliegen, und kann entsprechende Gegenmaßnahmen einleiten.

Anhand der Diagnosefunktionalität können über alle Lebensphasen des Steuerungsprogramms (SPS-Programms), in das es integriert ist, Diagnoseinformationen aus dem laufenden IEC-61131-Programm ausgegeben werden. Während der Erstellung des Steuerungsprogramms kann sich der Techniker z. B. direkt Informationen aus dem, im Rahmen von Entwicklertests, laufenden Code ausgeben lassen. Während der Inbetriebnahme der Maschine bzw. Anlage können z. B. für die Inbetriebnehmer relevante Informationen ausgegeben werden. Während des Betriebs der Maschine bzw. Anlage können z. B. für das Wartungspersonal relevante Informationen ausgegeben werden. Ein Grundgedanke der vorliegenden Erfindung besteht darin, eine ganzheitliche Technik bereitzustellen, bei der die Diagnosefunktionalität mit all ihren Elementen ausschließlich in SPS-typischen IEC-61131-Progammiersprachen entwickelt wird. Ferner kann sich die Diagnosefunktionalität in beliebige IEC-61131-Frameworks integrieren lassen. Entsprechend können die Diagnosefunktionalität und das SPS-Steuerungsprogramm mit demselben Engineering-Verfahren und bevorzugt demselben Engineering-Werkzeug (Engineering-Framework) erstellt werden. Ferner ist die erstellte Diagnosefunktionalität dadurch unabhängig vom Typ und Hersteller der SPS bzw. RTU und kann in derselben Echtzeitumgebung laufen wie das eigentliche Steuerprogramm für die SPS bzw. RTU.

Gemäß einem ersten allgemeinen Gesichtspunkt der Erfindung wird ein computerimplementiertes Verfahren zur Bereitstellung einer Diagnosefunktionalität für eine auf einer speicherprogrammierbaren Steuerung, SPS, basierenden Anwendung, vorzugsweise für eine auf einer speicherprogrammierbaren Steuerung basierenden Fernwirk-Außenstation, RTU, bereitgestellt. Die SPS bzw. RTU kann zur Überwachung und Steuerung einer Anlage oder Maschine dienen, und mit der Anlage oder Maschine eine automatisierungstechnische Anlage bilden.

Das Verfahren umfasst den Schritt der Bereitstellung eines IEC-61131-Frameworks, nachfolgend kurz als "Framework" bezeichnet. Das Framework ist zur Erstellung eines Steuerungsprogramms in mindestens einer IEC-61131-konformen Programmiersprache für eine SPS, vorzugsweise für eine SPS zur Steuerung einer RTU, ausgebildet. Das Framework ist ferner ausgebildet, mehrere Funktionsbausteine bereitzustellen, mittels derer die Diagnosefunktionalität in mindestens einer IEC-61131-3-konformen Programmiersprache erstellbar ist. Vorstehend wurde bereits erwähnt, dass Funktionsbausteine vorprogrammierte Bausteine bzw. Module darstellen, die eine bestimmte Funktionalität bereitstellen.

Die mehreren Funktionsbausteine umfassen einen Diagnoseserver-Funktionsbaustein zur Instanziierung eines Diagnoseservers zum Datenaustausch von Diagnosedaten mit einem Diagnoseclient. Die mehreren Funktionsbausteine umfassen ferner mindestens einen Nachrichten-Funktionsbaustein zur Instanziierung mindestens eines Nachrichtenelements, das ausgebildet ist, bei einem Aufruf des instanziierten Nachrichtenelementes eine Diagnosenachricht in eine Datenaustauschdatenstruktur zu schreiben. Die mehreren Funktionsbausteine umfassen ferner einen Strukturdatentyp zur Bereitstellung einer Datenaustauschdatenstruktur zum Datenaustausch zwischen dem instanziierten mindestens einen Nachrichtenelement und dem instanziierten Diagnoseserver. Der Strukturdatentyp stellt somit im instanziierten Zustand eine Datenstruktur bereit, die in vorbestimmter Weise automatisiert die Datenkommunikation zwischen dem instanziierten mindestens einen Nachrichtenelement und dem instanziierten Diagnoseserver bereitstellt und/oder ermöglicht. Unter einer Instanziierung der Funktionsbausteine wird deren programmtechnische Umsetzung bei der Erstellung des Steuerungsprogramms und der Diagnosefunktionalität in einer Echtzeit-Laufzeitumgebung verstanden, d.h. aus dem Diagnoseserver-Funktionsbaustein wird z. B. ein Diagnose-Server in der Laufzeitumgebung erzeugt.

Das erfindungsgemäße Verfahren bietet den besonderen Vorzug, dass die Diagnosefunktionalität mit all ihren Elementen ausschließlich in einer oder mehreren SPS-typischen IEC 61131-Progammiersprachen entwickelt wird. Die Diagnosefunktionalität wird entsprechend mit demselben Engineering-Verfahren erstellt wie die Programmierung des Steuerungsprogramms. Die auf diese Weise erstelle Diagnosefunktionalität ist somit unabhängig von dem eingesetzten SPS-Engineering-Werkzeug.

In einer bevorzugten Ausführungsform ist das Framework ausgebildet, das Steuerungsprogramm und die durch die mehreren Funktionsbausteine (programmtechnisch) erstelle Diagnosefunktionalität ausschließlich in der mindestens einen IEC-61131-konformen Programmiersprache zu erstellen. Anders ausgedrückt ist das Framework ausgebildet, das Steuerungsprogramm und die Diagnosefunktionalität ausschließlich in SPS-typischen IEC-61131-3 Programmiersprachen zu entwickeln. Das Framework kann somit als Programmiergerüst ausgebildet sein, mittels dessen und/oder mittels derer sowohl ein Steuerungsprogramm als auch die Diagnosefunktionalität für eine auf einer SPS basierenden Anwendung, vorzugsweise für eine auf einer SPS basierenden RTU, erstellbar ist. Das Steuerungsprogramm und die Diagnosefunktionalität können somit mit demselben Engineering-Verfahren und demselben Engineering-Werkzeug erstellt werden. Dadurch kann der Engineering-Aufwand reduziert werden.

In einer weiteren bevorzugten Ausführungsvariante ist das IEC-61131-Framework ausgebildet, die durch die mehreren Funktionsbausteine erstellbare Diagnosefunktionalität automatisch bei Erstellung eines Steuerungsprogramms für die SPS mitentstehen zu lassen und/oder in das erstellte Steuerungsprogramm zu integrieren. Vorteilhaft wird die Erstellung der Diagnosefunktionalität für den Techniker vereinfacht, da keine zusätzliche Programmierung und/oder Konfiguration notwendig ist. Der Techniker muss die Diagnosefunktionalität somit bei der Erstellung des Steuerungsprogramms nicht berücksichtigen.

Gemäß einem weiteren Aspekt kann die durch die mehreren Funktionsbausteine bereitgestellte Diagnosefunktionalität (direkt) in einer IEC-61131-Echtzeit-Laufzeitumgebung lauffähig (ausführbar) sein. Das mittels des Frameworks erstellbare oder erstellte Steuerungsprogramm und die Diagnosefunktionalität können zusammen in der gleichen IEC-61131-Echtzeit-Laufzeitumgebung ausgeführt werden und/oder ausführbar sein. Entsprechend wird für die Diagnosefunktionalität vorteilhaft keine separate Laufzeitumgebung (engl. Runtime environment) benötigt. Ferner ist dadurch, dass das Konzept der Diagnosefunktionalität direkt in den IEC-61131-Code integriert ist und daher auch in der SPS-Echtzeit-Laufzeitumgebung läuft, die Diagnosefunktionalität zwangsläufig über alle Lebensphasen des Steuerungsprogramms, nämlich bei Erstellung, Inbetriebnahme und im Betrieb, verfügbar. Zudem ist zeit- bzw. zyklusgenaues Logging und Kennzeichnen der Diagnosenachrichten möglich.

In einer weiteren Ausführungsform sind mittels des mindestens einen Nachrichten-Funktionsbausteins mehrere Nachrichtenelemente konfigurierbar, für die jeweils festlegbar ist, welche Diagnosenachrichten das jeweilige Nachrichtenelement im instanziierten Zustand wann und/oder unter welcher Bedingung erzeugt. Ein Aufruf des instanziierten Nachrichtenelementes, eine Diagnosenachricht in eine Datenaustauschdatenstruktur zu schreiben, kann (automatisch) erfolgen, wenn die festgelegte Bedingung, wann und/oder unter welcher Bedingung eine Diagnosenachricht erzeugt wird, erfüllt ist. Die Bedingung kann ein Programmteil, z. B. ein Funktionsbauteil, des Steuerungsprogramms vorgeben, mit dem das jeweilige Nachrichtenelement, insbesondere programmtechnisch, abgestimmt ist. Dadurch wird eine Interaktion zwischen dem jeweiligen Nachrichtenelement und dem Steuerungs-programm möglich. Die Bedingung kann ein Signal und/oder Daten vorgeben, das/die im Steuerungsprogramm auftritt/auftreten (insbesondere die vom Steuerungsprogramm empfangen, versendet, verarbeitet und/oder erzeugt werden) und vom jeweiligen Nachrichtenelement auszulesen ist/sind. Eine Diagnosenachricht auf Basis des ausgelesenen Signals und/oder der ausgelesenen Daten kann in die Diagnoseaustauschdatenstruktur geschrieben werden.

Alternativ oder zusätzlich unterscheiden sich die mehreren Nachrichtenelemente voneinander dadurch, dass durch jedes Nachrichtenelement ein anderes, vorbestimmtes Diagnoseereignis und/oder das vorbestimmte Diagnoseereignis zu einem anderen Diagnosezeitpunkt feststellbar ist. Ein Aufruf des instanziierten Nachrichtenelementes, eine Diagnosenachricht in eine Datenaustauschdatenstruktur zu schreiben, kann (automatisch) erfolgen, wenn das vorbestimmte Diagnoseereignis und/oder der vorbestimmte Diagnosezeitpunkt eingetreten ist. Ein Diagnoseereignis kann ein Ereignis des Steuerungsprogramms sein, das das jeweilige Nachrichtenelement aufruft. Das Ereignis kann z. B. ein Empfang, Versenden, Verarbeiten und/oder Erzeugen eines Signals und/oder Daten sein, das/die vom jeweiligen Nachrichtenelement auszulesen ist/sind.

Vorteilhaft kann der mindestens eine Nachrichten-Funktionsbaustein des Frameworks verschiedene Elemente enthalten, die für die Feststellung von Diagnosenachrichten bei vorbestimmten Bedingungen bzw. Diagnoseereignissen vorprogrammiert sind. Die Nachrichtenelemente können somit ohne zusätzliche Programmierung zur Festlegung der Bedingungen instanziiert werden, was die Erstellung der Diagnosefunktionalität für den Techniker vereinfacht.

Die mehreren Nachrichtenelemente können derart konfigurierbar sein, dass für bzw. durch jedes Nachrichtenelement eine andere Bedingung und/oder ein anderes Diagnoseereignis festlegbar ist. Durch jedes Nachrichtenelement können andere Informationen (Signale und/oder Daten) ausgelesen werden. Alternativ können für bzw. durch zwei oder mehrere Nachrichtenelemente dieselbe Bedingung und/oder dasselbe Diagnoseereignis festlegbar sein. Durch diese Redundanz kann eine erhöhte Sicherheit erzielt werden, dass bei der Erzeugung der Diagnosedaten keine relevanten Informationen verloren gehen.

In einer weiteren Ausführungsform ist das IEC-61131-Framework ferner ausgebildet, mehrere Steuerungs-Funktionsbausteine zur Erstellung des Steuerungsprogramms für die SPS bereitzustellen. Mittels des mindestens einen Nachrichten-Funktionsbausteins sind Nachrichtenelemente konfigurierbar und den Steuerungs-Funktionsbausteinen zuordenbar, derart, dass ein Steuerungs-Funktionsbaustein im instanziierten Zustand mindestens ein zugeordnetes Nachrichtenelement aufweist. Das Konfigurieren und/oder Zuordnen der Nachrichtenelemente kann vorzugsweise automatisch erfolgen. Das Instanziieren des Steuerungs-Funktionsbausteins kann das Zuordnen des mindestens einen Nachrichtenelements triggern (aufrufen). Das mindestens eine zugeordnete Nachrichtelement ist, vorzugsweise ausschließlich, zur Interaktion mit dem Steuerungs-Funktionsbaustein im instanziierten Zustand konfiguriert. Das mindestens eine zugeordnete Nachrichtenelement kann (signalund/oder datentechnisch) unmittelbar mit dem Steuerungs-Funktionsbaustein verbunden sein. In anderen Worten, es wird eine unmittelbare Kommunikation zwischen dem zugeordneten Nachrichtenelement und dem Steuerungs-Funktionsbaustein bereitgestellt. Der Steuerung-Funktionsbaustein kann ferner ausgebildet sein, das mindestens eine zugeordnete Nachrichtenelement aufzurufen.

Vorteilhaft kann die Diagnosefunktionalität derart mit dem Steuerungsprogramm verbunden werden, dass die jeweiligen Nachrichtenelemente in die instanziierten Steuerungs-Funktionsbausteinen, aus denen sie Signale und/oder Daten zu Erstellung der Diagnosenachrichten auslesen, zugeordnet, insbesondere integriert, werden. Dadurch kann ein zuverlässiges Auslesen von für Diagnosen relevanten Informationen und eine zuverlässige Erzeugung der Diagnosenachrichten sichergestellt werden.

Ferner vorteilhaft kann die Diagnosefunktionalität bereits nach der Instanziierung des jeweiligen Steuerungs-Funktionsbausteins und der Zuordnung des mindestens einen Nachrichtenelements funktionsfähig sein, auch wenn das Steuerungsprogramm noch nicht vollständig erstellt worden ist. Die Diagnosefunktionalität kann daher nicht nur bei Inbetriebnahme oder im Betrieb des Steuerungsprogramms, sondern bereits bei der Erstellung des Steuerungsprogramms verfügbar sein.

In einer weiteren Ausführungsvariante werden bei der Erstellung der Diagnosefunktionalität für die auf einer SPS basierenden Anwendung genau ein Diagnoseserver aus dem Diagnoseserver-Funktionsbaustein, genau eine Datenaustauschdatenstruktur aus dem Strukturdatentyp und mindestens ein Nachrichtenelement, vorzugsweise mehrere Nachrichtenelemente, aus dem mindestens einen Nachrichten-Funktionsbaustein instanziiert werden.

Alternativ oder zusätzlich werden der Diagnoseserver und das mindestens eine Nachrichtenelement zum Datenaustausch durch Anschluss der Datenaustauschdatenstruktur als INOUT-Variable miteinander verbunden. Entsprechend kann dadurch die Datenkommunikation zwischen den Nachrichtenelementen und dem Diagnoseserver vereinfacht werden.

In einer weiteren Ausführungsvariante ist der Diagnoseserver ferner ausgebildet, die Diagnosenachricht aus der Datenaustauschdatenstruktur zu lesen und anhand hinterlegter Relevanzbedingungen auszuwerten, ob die Diagnosenachricht relevant ist, und die Diagnosenachricht oder eine auf Basis der Diagnosenachricht erstellte aufbereitete Diagnosenachricht an den Diagnoseclient zu senden, falls die Diagnosenachricht relevant ist. Vorteilhaft kann der Datenverkehr zwischen dem Diagnoseserver und dem Diagnoseclient optimiert werden, indem nur die relevanten Diagnosenachrichten an den Diagnoseclient übertragen werden. Die übertragene Datenmenge wird dadurch reduziert. Ferner erfolgen alle Verarbeitungsschritte der Diagnosenachrichten durch die in der SPS implementierten Diagnosefunktionalität, sodass der Diagnoseclient möglichst schlank und lediglich zum Empfangen und Anzeigen der übertragenen Daten ausgebildet sein kann.

In einer weiteren Ausführungsform ist die Diagnosefunktionalität als ein Textmeldesystem ausgeführt. Vorzugsweise schreibt das mindestens eine Nachrichtenelement bei Feststellen des vorbestimmten Diagnoseereignisses eine Diagnosenachricht als Textmeldung in die Datenaustauschdatenstruktur. Dies bietet eine vereinfachte Übertragung relevanter Informationen, z. B. ohne Kodierungs- oder Datenumwandlungsschritte.

In einer Ausführungsform verwendet der Diagnoseserver zur Datenkommunikation mit dem Diagnoseclient einen Diagnosekanal und/oder ein Kommunikationsprotokoll zur Datenkommunikation, der und/oder das ausschließlich zur Datenkommunikation von Diagnosedaten verwendet wird. Alternativ oder zusätzlich weist der Diagnoseserver ein TCP/IP-Socket zur Datenkommunikation mit dem Diagnoseclient auf. Das Kommunikationsprotokoll kann optional zusätzlich auf den Normen der Reihe IEC 60870-5 und -6 basieren. Das Kommunikationsprotokoll kann somit ein namenloses Protokoll sein, das nur für den vorliegenden Zweck zum Datenaustausch zwischen dem Diagnoseclient und dem Diagnoseserver betreffend die Diagnosedaten verwendet wird. Entsprechend kann das Protokoll für die Kommunikation der Diagnosedaten optimiert sein. Hierdurch kann die benötigte Bandbreite (schmaler Datenkanal) reduziert werden und die Effizienz gesteigert werden.

Zur Datenkommunikation der Diagnosedaten kann ferner ein Datenmodell verwendet werden, das ausschließlich für die Diagnosedaten vorgesehen ist. Das Datenmodell legt zweckmäßig fest, wie die Diagnosedaten abgebildet werden, um mittels des Kommunikationsprotokolls übertragen zu werden. Das Kommunikationsprotokoll kann entsprechend ausgebildet sein, ausschließlich Daten gemäß diesem Datenmodell zu übertragen. Dadurch, dass zur Abbildung der Diagnosedaten ein eigenes Datenmodell und/oder zur Übertragung ein eigenes Kommunikationsprotokoll verwendet wird, ist die erstellte Diagnosefunktionalität somit nicht nur unabhängig von dem eingesetzten SPS-Engineering-Werkzeug, sondern auch unabhängig von der verwendeten Visualisierung, sofern vorhanden.

In einer weiteren Ausführungsvariante umfasst das Verfahren ferner eine Bereitstellung eines Diagnoseclients, der zur Datenkommunikation mit dem aus dem Diagnoseserver-Funktionsbaustein instanziierten Diagnoseserver ausgebildet ist. Der Diagnoseclient ist in einer bevorzugten Ausführungsvariante ausschließlich dazu ausgebildet, eine Datenkommunikation mit einem oder mehreren Diagnoseservern durchzuführen, um vom Server empfangene Diagnosedaten anzuzeigen, vorzugsweise um die Diagnosedaten mit Zeitstempel und weiteren Zusatzinformationen (z. B. Informationen abhängig vom SPS-Zyklus) anzuzeigen. Entsprechend kann der Diagnoseclient als eigenständige Client-PC-Anwendung/ -App für das Anzeigen von Diagnosedaten ausgeführt sein und als schlanker Client ausgeführt sein. Das Anzeigen kann mittels des Diagnoseclients zu jeder Zeit und auf jedem Gerät mit Hilfe des Diagnoseclients erfolgen. Alternativ oder zusätzlich verwendet der Diagnoseclient zur Anzeige der Diagnosedaten keine HTML oder JAVA-basierte Technologie. Anzeigeprobleme wie bei Web-Anzeigen mit Browsern, die die benötigte Technologie (z. B. Java) nicht unterstützt und/oder aus Sicherheitsgesichtspunkten nicht zulässt, können entsprechend vermieden werden. Ferner alternativ oder zusätzlich ist der Diagnoseclient dazu ausgebildet, wahlweise Diagnosedaten mehrerer SPS-basierenden Fernwirk-Außenstationen anzuzeigen. Der Diagnoseclient kann ein reiner software-basierter Client sein, der auf eine Anzeigeeinrichtung, die einen Bildschirm aufweist, ausgeführt ist. Alternativ kann der Diagnoseclient kann auch als eine Vorrichtung ausgeführt sein, die eine Anzeigeeinrichtung mit einem Bildschirm aufweist, z. B. ein Tablet-Computer oder ein mobiles Kommunikationsgerät.

Gemäß einem zweiten allgemeinen Gesichtspunkt wird eine Vorrichtung zur Datenverarbeitung bereitgestellt, die Mittel zur Ausführung des Verfahrens, wie es in diesem Dokument beschrieben ist, umfasst.

Gemäß einem weiteren allgemeinen Gesichtspunkt wird eine Fernwirk-Außenstation bereitgestellt, die auf einer SPS basiert und eine Diagnosefunktionalität umfasst, wobei die Diagnosefunktionalität mittels der Funktionsbausteine gemäß einem Verfahren, wie es in diesem Dokument beschrieben ist, erstellt ist.

Gemäß einem weiteren allgemeinen Gesichtspunkt wird ein System zur Datenverarbeitung bereitgestellt, umfassend eine Vorrichtung zur Datenverarbeitung, die ausgebildet ist, das IEC-61131-Framework gemäß einem Verfahren, wie es in diesem Dokument beschrieben, bereitzustellen. Alternativ oder zusätzlich kann das System einen Diagnoseserver umfassen, der durch eine Instanziierung eines Diagnoseserver-Funktionsbausteins eines gemäß dem Verfahren, wie es in diesem Dokument beschrieben, bereitgestellten IEC-61131-Frameworks erzeugt ist. Ferner alternativ oder zusätzlich kann das System einen Diagnoseclient umfassen, der zur Datenkommunikation mit dem Diagnoseserver ausgebildet ist.

Gemäß einem weiteren allgemeinen Gesichtspunkt wird ein Computerprogramm bereitgestellt und beansprucht, umfassend Befehle, die bei der Ausführung des Programms durch einen Computer diesen veranlassen, das Verfahren, wie es in diesem Dokument beschrieben ist, auszuführen. Gemäß einem weiteren allgemeinen Gesichtspunkt wird computerlesbares Speichermedium bereitgestellt, umfassend Befehle, die bei der Ausführung durch einen Computer diesen veranlassen, das Verfahren, wie es in diesem Dokument beschrieben ist, auszuführen. Gemäß einem weiteren allgemeinen Gesichtspunkt wird ein Daten trägersignal bereitgestellt und beansprucht, welches das Computerprogramm überträgt.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines IEC-61131-Frameworks und eines daraus erzeugten Steuerungsprogramms mit einer Diagnosefunktionalität zur Illustration eines Verfahrens gemäß einer Ausführungsform der Erfindung;
- Figur 2:: eine schematische Darstellung des Steuerungsprogramms mit der Diagnosefunktionalität gemäß einer Ausführungsform der Erfindung;
- Figur 3:: eine schematische Darstellung des Steuerungsprogramms mit verschiedenen Instanzen des Steuerungsprogramms und integrierter Diagnosefunktionalität gemäß einer Ausführungsform der Erfindung; und
- Figur 4:: eine schematische Darstellung eines Diagnoseservers und des Datenaustausches mit dem Diagnoseclient gemäß einer Ausführungsform der Erfindung.

Gleiche oder funktional äquivalente Elemente sind in allen Figuren mit denselben Bezugszeichen beschrieben und zum Teil nicht gesondert beschrieben.

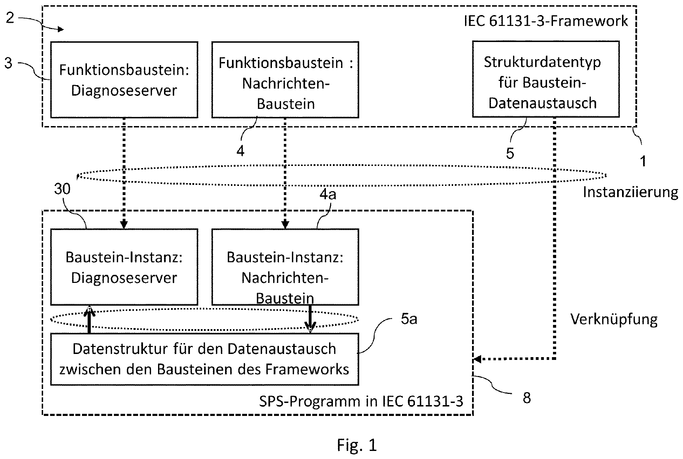

Figur 1 zeigt eine schematische Darstellung eines IEC-61131-Frameworks 1 und eines daraus erzeugten Steuerungsprogramms 8 gemäß einer Ausführungsform. Das IEC-61131-Framework 1 (nachfolgend kurz als Framework 1 bezeichnet) kann auch als Programmiergerüst bezeichnet werden. Das Framework 1 stellt ein Programmiergerüst da, welches für den Techniker (Programmierer) zur Erstellung des Steuerungsprogramms für eine SPS, vorzugsweise für eine SPS zur Steuerung einer RTU, einen vorprogrammierten Rahmen und software-basiertes Entwicklungswerkzeug bereitstellt, innerhalb dessen dieser eine anwendungsspezifische zu der Norm IEC 61131-3 konforme Programmierung des Steuerungsprogramms für die SPS und der Diagnosefunktionalität erstellen kann.

Einzelne Funktionen, Elemente und Bausteine sind bereits im Framework 1 enthalten oder vorprogrammiert, die in diesem Dokument als Funktionsbausteine bezeichnet sind.

Das Steuerungsprogramm und die Diagnosefunktionalität werden ausschließlich in einer oder mehreren der IEC 61131-Programmiersprachen durch Instanziierung der in dem Framework 1 enthaltenen Funktionsbausteine und Strukturen und durch anschließende Verknüpfung dieser erstellt, was in Figur 1 in Bezug auf die Diagnosefunktionalität darge stellt ist.

So ist das Framework 1 insbesondere ausgebildet, mehrere Funktionsbausteine 2 bereitzustellen, mittels derer die Diagnosefunktionalität in der mindestens einen IEC-61131-konformen Programmiersprache erstellbar ist.

Die mehreren Funktionsbausteine 2 umfassen einen Diagnoseserver-Funktionsbaustein 3 zur Instanziierung eines Diagnoseservers 30 zum Datenaustausch von Diagnosedaten mit einem Diagnoseclient (der Diagnoseclient ist in Figur 1 nicht dargestellt). Der Diagnoseserver-Funktionsbaustein 3 stellt somit ein vorprogrammiertes Programmmodul dar, welches für die Diagnosefunktionalität verwendet werden kann, das im Steuerungsprogramm 8 integriert sein kann. Aus dem Diagnoseserver-Funktionsbaustein 3 wird bei der Erstellung des Steuerungsprogramms für eine SPS in einer Echtzeit-Laufzeitumgebung ein Diagnoseserver 30 instanziiert.

Die Funktionsbausteine 2 umfassen ferner mindestens einen Nachrichten-Funktionsbaustein 4 zur Instanziierung mindestens eines Nachrichtenelements 4a, das ausgebildet ist, bei einem Aufruf des instanziierten Nachrichtenelementes eine Diagnosenachricht, z. B. als Textmeldung, in eine Datenaustauschdatenstruktur 5a zu schreiben.

Bei der Erstellung des Steuerungsprogramms 8 entstehen somit gleichzeitig und vorzugsweise automatisch durch den Diagnoseserver-Funktionsbaustein 3 und den mindestens einen Nachrichten-Funktionsbaustein 4 in einer IEC-61131-Echtzeit-Laufzeitumgebung entsprechende Instanzen 30 und 4a des Diagnoseserver-Funktionsbausteins 3 und des mindestens einen Nachrichten-Funktionsbausteins 4.

Die Funktionsbausteine 2 umfassen ferner einen Strukturdatentyp 5 zur Bereitstellung einer Datenaustauschdatenstruktur zum Datenaustausch zwischen dem instanziierten mindestens einen Nachrichtenelement 4a und dem instanziierten Diagnoseserver 30. Aus dem Strukturdatentyp 5 entsteht bei der Erstellung der Diagnosefunktionalität eine Instanz 5a, die die Datenaustauschdatenstruktur für den Datenaustausch zwischen den Bausteinen des Frameworks, die in der Diagnosefunktionalität genutzt werden, bereitstellt.

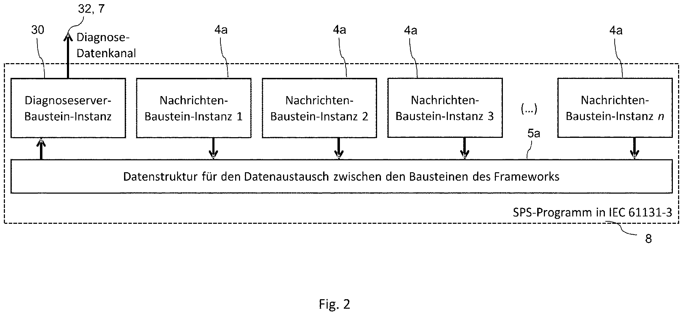

Die Verknüpfung der instanziierten Nachrichtenelemente 4a untereinander und mit dem Diagnoseserver 30 erfolgt über diese Datenaustauschdatenstruktur 5a zum Datenaustausch zwischen den Nachrichtenelementen 4a und zum Datenaustausch mit dem Diagnoseserver 30, was in Figur 2 nochmals vergrößert dargestellt ist.

Figur 2 zeigt eine schematische Darstellung eines Steuerungsprogramms 8, das wie jedes herkömmliche Steuerungsprogramm für die SPS in einer IEC 61131-konformen Laufzeitumgebung abläuft. Der Diagnoseserver 30 und die Datenaustauschdatenstruktur 5a werden bei der Erstellung der Diagnosefunktionalität für die auf einer SPS basierenden Anwendung genau einmal instanziiert. Ferner werden mehrere Instanzen des Nachrichtenelements 4a erstellt, die aus einem oder mehreren Nachrichten-Funktionsbausteinen 4 instanziiert werden.

Mittels der mindestens einen Nachrichten-Funktionsbaustein 4 sind mehrere Nachrichtenelemente 4a konfigurierbar. Vorzugsweise sind die Instanzen 1 bis n des Nachrichtenelements 4a nicht identisch, sondern dienen dazu, unterschiedliche Diagnoseereignisse bzw.

Diagnoseereignisse zu verschiedenen Diagnosezeitpunkten festzustellen. Für die mehreren Nachrichtenelemente 4a kann jeweils festlegbar sein, welche Diagnosenachrichten das jeweilige Nachrichtenelement im instanziierten Zustand wann und/oder unter welcher Bedingung erzeugt. Alternativ oder zusätzlich können sich die mehreren Nachrichtenelemente 4a voneinander dadurch unterscheiden, dass durch jedes Nachrichtenelement 4a ein anderes, vorbestimmtes Diagnoseereignis und/oder das vorbestimmte Diagnoseereignis zu einem anderen Diagnosezeitpunkt feststellbar ist.

Der Diagnoseserver 30 und die Nachrichtenelemente 4a sind zum Datenaustausch durch Anschluss der Datenaustauschdatenstruktur 5a miteinander verbunden. Die Datenaustauschdatenstruktur 5a kann dabei als INOUT-Variable (vergleichbar mit einer sog. Call-By-Reference-Parameterübergabe) an den Diagnoseserver 30 und alle Nachrichtenelemente 4a übergeben werden.

Alle bereitgestellten Funktionsbausteine 2 und damit die Diagnosefunktionalität mit all ihren Elementen sind ausschließlich in IEC 61131-Programmiersprachen entwickelt. Dies bietet den Vorzug, dass ein Techniker, der sowohl die Steuerung der SPS in einer IEC 61131-Programmiersprache entwickelt als auch die Diagnosefunktionalität hierfür, keine zwei Engineering-Verfahren und keine zwei Engineering-Werkzeuge für die Erstellung der SPS Programme und der Visualisierungsprogramme benötigt. Der Techniker, z. B. ein IEC-61131-3-Programmierer, der ein SPS-Programm entwickelt, kann mit diesen Kenntnissen auch die Diagnosefunktionalität vorsehen. Gemäß dem Framework 1 kann somit die Diagnosefunktionalität erstellt werden, die unabhängig von SPS-Typ und -Hersteller sind bzw. lässt sich die Diagnosefunktionalität erstellen, die unabhängig von dem eingesetzten SPS Engineering-Werkzeug, mit dem sie erstellt wurden, lauffähig sind, so lange die Echtzeit-Laufzeitumgebung IEC 61131-konfom ist.

Ferner können nun das Steuerungsprogramm 8 und die vorzugsweise integrierte Diagnosefunktionalität für eine SPS zusammen im IEC-61131-Echtzeit-Laufzeitsysem ablaufen. Es wird keine separate Laufzeitumgebung benötigt. Die Diagnosefunktionalität, da es in einer IEC 61131-Programmiersprache entwickelt ist, ist wie ein normales SPS-Programm in einer IEC 61131-konformen Laufzeitumgebung lauffähig.

Das Framework 1 kann ferner vorprogrammierte Funktionen, Elemente und Bausteine in Form von Steuerungs-Funktionsbausteinen zur Erstellung des Steuerungsprogramms 8 bereitstellen. Die ausgewählten Steuerung-Funktionsbausteine werden instanziiert, wodurch innerhalb des Steuerungsprogramms 8 verschiedene programmtechnische Aufgaben bereitgestellt werden, um eine gewünschte Maschine oder Anlage mittels der RTU überwachen, steuern und/oder regeln zu können. Mit diesen Funktionsbausteinen kann der Techniker somit mit geringem eigenem Programmieraufwand das Steuerungsprogramm 8 erstellen, dass für Überwachung, Steuerung und/oder Regelung der Maschine bzw. Anlage angepasst ist.

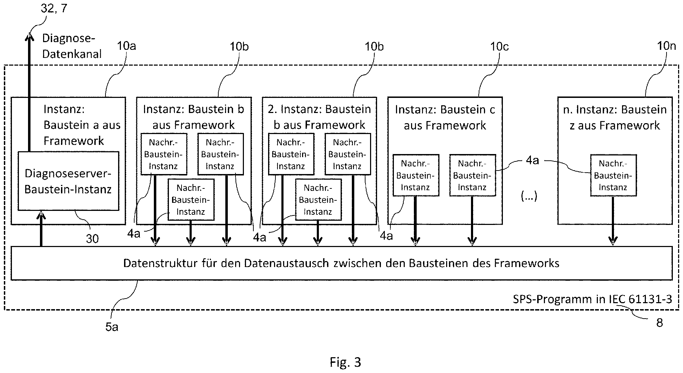

Wie die Diagnosefunktionalität besteht somit auch das Steuerungsprogramm 8 aus verschiedenen Instanzen 10a-10n, wie in Fig. 3 gezeigt ist. Bei der Erstellung des Steuerungsprogramms 8 und der gleichzeitigen Erstellung der Diagnosefunktionalität können mittels des mindestens eine Nachrichten-Funktionsbausteins 4 Nachrichtenelemente 4a konfiguriert und den Steuerungs-Funktionsbausteinen zugeordnet werden, sodass die instanziierten Steuerungs-Funktionsbausteine 10a-10n jeweils das zugeordnete Nachrichtenelement bzw. die zugeordneten Nachrichtenelemente aufweisen. Die jeweiligen Nachrichtenelemente 4a werden somit den instanziierten Steuerungs-Funktionsbausteinen 10a-10n zugeordnet, aus denen sie Signale und/oder Daten zu Erstellung der Diagnosenachrichten auslesen. Dadurch kann ein zuverlässiges Auslesen von für Diagnosen relevanten Informationen und eine zuverlässige Erzeugung der Diagnosenachrichten sichergestellt werden. Ferner ist auf diese Weise eine Integration der Diagnosefunktionalität in jedes beliebige Steuerungsprogramm 8 für eine SPS möglich.

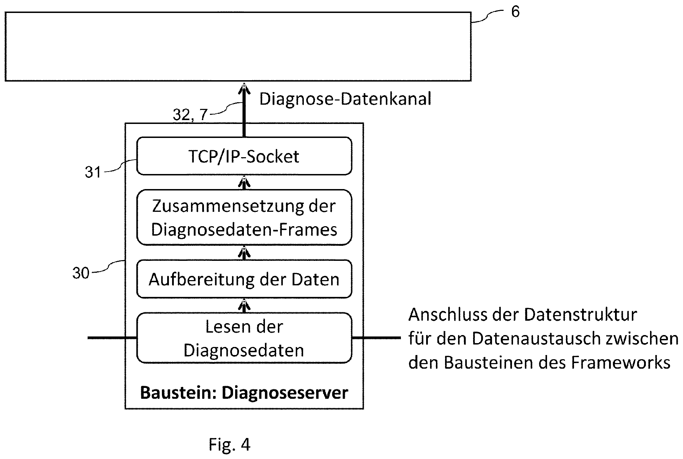

Figur 4 zeigt ein schematisches Blockdiagramm des Diagnoseservers 30 und illustriert den Datenaustausch des Diagnoseservers 30 mit dem Diagnoseclient 6 gemäß einer Ausführungsform.

Der Diagnoseserver 30 ist ausgebildet ist, die Diagnosenachricht aus der Datenaustauschdatenstruktur 5a zu lesen und aufzubereiten. Dabei wird die Diagnosenachricht z. B. anhand hinterlegter Relevanzbedingungen ausgewertet, ob die Diagnosenachricht relevant ist. Wird eine Relevanz festgestellt, so erfolgt ein Senden der Diagnosenachricht oder einer auf Basis der Diagnosenachricht erstellte aufbereitete Diagnosenachricht an den Diagnoseclient 6.

Der Datenaustausch zwischen Diagnoseserver 30 und Diagnoseclient 6 erfolgt über eine TCP/IP-Kommunikation, wobei der Diagnoseserver 30 einen TCP/IP-Socket 31 umfasst. Der Diagnoseserver 30 und der Diagnoseclient 6 sind datentechnisch über einen Diagnosekanal 32, der ausschließlich zur Datenkommunikation von Diagnosedaten verwendet wird, und/oder ein namenloses, ausschließlich für den Zweck des Datenaustausches von Diagnosedaten entwickeltes Kommunikationsprotokoll 7 verbunden.

Bei dem Diagnoseclient 6 handelt es sich um eine schlanke Computeranwendung, z. B. eine Applikation eines mobilen Kommunikationsgeräts, das ausschließlich dazu ausgebildet ist, eine Datenkommunikation mit dem Diagnoseserver 30 durchzuführen, um vom Server empfangene Diagnosedaten anzuzeigen, vorzugsweise um die Diagnosedaten mit Zeitstempel und weiteren Zusatzinformationen anzuzeigen. Der Diagnoseclient 6 kann auch mit mehreren Diagnoseservern kommunizieren bzw. ausgebildet sein, wahlweise Diagnosedaten mehrerer SPS-basierender RTUs anzuzeigen. Der Diagnoseclient kann auch als Client-PC-Anwendung/ -App ausgeführt sein.

Das Kommunikationsprotokoll 7 kann ein speziell zur Datenkommunikation von Diagnosedaten zwischen dem Diagnoseserver 30 und dem Diagnoseclient 6 entwickeltes Protokoll sein, dass entsprechend ausschließlich für diese Datenkommunikation von Diagnosedaten verwendet wird. Der Datenübertragung der Diagnosedaten kann ein Versenden einer Ereignis-Anfrage von dem Diagnoseserver 30 an den Diagnoseclient 6 vorausgehen, worauf der Diagnoseclient 6 mit einer (positiven oder negativen) Bestätigung antwortet. Alternativ kann das Kommunikationsprotokoll 7 auch Anfrage-basierend sein, wobei der Diagnoseclient 6 zunächst eine Anfrage zur Übertragung von Diagnosedaten an den Diagnoseserver 30 sendet.

Alternativ sind selbstverständlich unterschiedliche Implementierungen des Frameworks 1, des Kommunikationsprotokolls 7 und des Diagnoseclients 6 möglich, so lange eine Datenkommunikation zwischen aus dem Framework 1 erstellten Diagnoseserver 30 und dem Diagnoseclient 6 sichergestellt ist. Der Diagnoseserver 30 und der Diagnoseclient 6 müssen also beide das Kommunikationsprotokoll 7 zum Datenaustausch über den Diagnosekanal 32 nutzen und der Diagnoseclient 6 entsprechend programmtechnisch eingerichtet sein, die empfangenen Diagnosedaten richtig zu interpretieren.

Zusammengefasst wird somit vorliegend eine ganzheitliche Technik bereitgestellt, bei der die Diagnosefunktionalität ausschließlich in SPS-typischen IEC-61131-Progammiersprachen bereitgestellt wird. Entsprechend können die Diagnosefunktionalität und das SPSSteuerungsprogramm mit demselben Engineering-Verfahren und demselben Engineering-Werkzeug (Engineering-Framework) erstellt werden. Entsprechend ist die erstellte Diagnosefunktionalität unabhängig von SPS-Typ und -Hersteller und kann in derselben Echtzeitumgebung laufen, wie das eigentliche Steuerungsprogramm für die SPS.

### Bezugszeichenliste

- 1: IEC- 61131-Framework
- 2: Funktionsbausteine
- 3: Diagnoseserver-Funktionsbaustein
- 3a: Diagnoseserver
- 4: Nachrichten-Funktionsbaustein
- 4a: Nachrichtenelement
- 5: Strukturdatentyp
- 5a: Datenaustauschdatenstruktur
- 6: Diagnoseclient
- 7: Kommunikationsprotokoll
- 8: Steuerungsprogramm
- 10a, 10b, 10c, 10n: Instanzen von Steuerungs-Funktionsbausteinen
- 30: Diagnoseserver
- 31: TCP/IP-Socket
- 32: Diagnosekanal

## Patentansprüche

1. Computerimplementiertes Verfahren zur Bereitstellung einer Diagnosefunktionalität für eine auf einer speicherprogrammierbaren Steuerung, SPS, basierenden Anwendung, umfassend die Schritte:
a) Erstellung eines Steuerungsprogramms (8) in mindestens einer IEC-61131-konformen Programmiersprache für eine SPS mittels eines IEC-61131-Frameworks (1), wobei das IEC-61131-Framework (1) mehrere Funktionsbausteine (2) bereitstellt, mittels derer die Diagnosefunktionalität in der mindestens einen IEC-61131-konformen Programmiersprache erstellt wird,
wobei die mehreren Funktionsbausteine (2) umfassen:
a1) einen Diagnoseserver-Funktionsbaustein (3), der einen Diagnoseserver (30) zum Datenaustausch von Diagnosedaten mit einem Diagnoseclient (6) instanziiert,
a2) mindestens einen Nachrichten-Funktionsbaustein (4), der mindestens ein Nachrichtenelement (4a) instanziiert, das bei einem Aufruf des instanziierten Nachrichtenelementes (4a) eine Diagnosenachricht in eine Datenaustauschdatenstruktur (5a) schreibt, und
a3) einen Strukturdatentyp (5), der die Datenaustauschdatenstruktur (5a) zum Datenaustausch zwischen dem instanziierten mindestens einen Nachrichtenelement (4a) und dem instanziierten Diagnoseserver (30) bereitstellt.

2. Verfahren nach Anspruch 1, wobei die Anwendung eine auf der speicherprogrammierbaren Steuerung basierende Fernwirk-Außenstation, RTU, umfasst; und/oder
wobei die Diagnosefunktionalität für eine auf der speicherprogrammierbaren Steuerung basierenden Fernwirk-Außenstation, RTU, mittels der Funktionsbausteine (2) erstellt wird; und/oder
wobei das Steuerungsprogramms (8) für eine SPS zur Steuerung einer RTU erstellt wird.

3. Verfahren nach Anspruch 1 oder 2, wobei das IEC-61131-Framework (1) das Steuerungsprogramm (8) und die durch die mehreren Funktionsbausteine (2) erstellte Diagnosefunktionalität ausschließlich in der mindestens einen IEC-61131-konformen Programmiersprache erstellt.

4. Verfahren nach einem der Ansprüche 1 bis 3, wobei das IEC-61131-Framework (1) die durch die mehreren Funktionsbausteine (2) erstellte Diagnosefunktionalität automatisch bei Erstellung eines Steuerungsprogramms (8) für die SPS mitentstehen zu lässt und/oder in das erstellte Steuerungsprogramm (8) integriert.

5. Verfahren nach einem der Ansprüche 1 bis 4, wobei die durch die mehreren Funktionsbausteine (2) bereitgestellte Diagnosefunktionalität in einer IEC-61131-Echtzeit-Laufzeitumgebung läuft.

6. Verfahren nach einem der Ansprüche 1 bis 5, wobei mittels des mindestens einen Nachrichten-Funktionsbausteins (4) mehrere Nachrichtenelemente (4a) konfiguriert werden,
a) für die jeweils festgelegt wird, welche Diagnosenachrichten das jeweilige Nachrichtenelement (4a) im instanziierten Zustand wann und/oder unter welcher Bedingung erzeugt; und/oder
b) wobei sich die mehreren Nachrichtenelemente (4a) voneinander dadurch unterscheiden, dass durch jedes Nachrichtenelement (4a) ein anderes, vorbestimmtes Diagnoseereignis und/oder das vorbestimmte Diagnoseereignis zu einem anderen Diagnosezeitpunkt festgestellt wird.

7. Verfahren nach einem der Ansprüche 1 bis 6, wobei das IEC-61131-Framework (1) ferner mehrere Steuerungs-Funktionsbausteine zur Erstellung des Steuerungsprogramms für die SPS bereitstellt, und wobei mittels des mindestens eine Nachrichten-Funktionsbaustein (4) Nachrichtenelemente (4a) konfiguriert und den Steuerungs-Funktionsbausteinen zugeordnet werden, derart, dass ein Steuerungs-Funktionsbaustein (10a, 10b, 10c, 10n) im instanziierten Zustand mindestens ein zugeordnetes Nachrichtenelement (4a) aufweist.

8. Verfahren nach einem der Ansprüche 1 bis 7, wobei bei der Erstellung der Diagnosefunktionalität für die auf einer SPS basierenden Anwendung
a) genau ein Diagnoseserver (30) aus dem Diagnoseserver-Funktionsbaustein (3), genau eine Datenaustauschdatenstruktur (5a) aus dem Strukturdatentyp (5) und mindestens ein Nachrichtenelement (4a), vorzugsweise mehrere Nachrichtenelemente (4a), aus dem mindestens einen Nachrichten-Funktionsbaustein (4) instanziiert werden; und/oder
b) der Diagnoseserver (30) und das mindestens eine Nachrichtenelement (4a) zum Datenaustausch durch Anschluss der Datenaustauschdatenstruktur (5a) als IN-OUT-Variable miteinander verbunden werden.

9. Verfahren nach einem der Ansprüche 1 bis 8, wobei der Diagnoseserver (30) die Diagnosenachricht aus der Datenaustauschdatenstruktur (5a) liest und anhand hinterlegter Relevanzbedingungen auswertet, ob die Diagnosenachricht relevant ist, und die Diagnosenachricht oder eine auf Basis der Diagnosenachricht erstellte aufbereitete Diagnosenachricht an den Diagnoseclient (6) sendet, falls die Diagnosenachricht relevant ist.

10. Verfahren nach einem der Ansprüche 1 bis 9, wobei die Diagnosefunktionalität als ein Textmeldesystem ausgeführt wird, vorzugsweise wobei das mindestens eine Nachrichtenelement (4a) bei Feststellen des vorbestimmten Diagnoseereignisses eine Diagnosenachricht als Textmeldung in die Datenaustauschdatenstruktur (5a) schreibt.

11. Verfahren nach einem der Ansprüche 1 bis 10, wobei
a) der Diagnoseserver (30) zur Datenkommunikation mit dem Diagnoseclient (6) einen Diagnosekanal (32) und/oder ein Kommunikationsprotokoll (7) zur Datenkommunikation verwendet, der und/oder das ausschließlich zur Datenkommunikation von Diagnosedaten verwendet wird; und/oder
b) der Diagnoseserver (30) ein TCP/IP-Socket (31) zur Datenkommunikation mit dem Diagnoseclient (6) aufweist.

12. Verfahren nach einem der Ansprüche 1 bis 11, ferner umfassend:
Bereitstellung eines Diagnoseclients (6), der mit dem aus dem Diagnoseserver-Funktionsbaustein (3) instanziierten Diagnoseserver (30) Daten kommuniziert, wobei der Diagnoseclient (6)
a) ausschließlich eine Datenkommunikation mit einem oder mehreren Diagnoseservern (30) durchführt, um vom Server empfangene Diagnosedaten anzuzeigen, vorzugsweise um die Diagnosedaten mit Zeitstempel und weiteren Zusatzinformationen anzuzeigen;
b) zur Anzeige der Diagnosedaten keine HTML oder JAVA-basierte Technologie verwendet; und/oder
c) wahlweise Diagnosedaten mehrerer SPS-basierenden Fernwirk-Außenstationen, RTU, anzeigt.

13. Vorrichtung zur Datenverarbeitung, umfassend Mittel zur Ausführung des Verfahrens nach einem der Ansprüche 1 bis 12.

14. System zur Datenverarbeitung, umfassend
a) eine Vorrichtung zur Datenverarbeitung, die ausgebildet ist, das IEC-61131-Framework (1) gemäß einem Verfahren nach einem der Ansprüche 1 bis 12 bereitzustellen;
b) einen Diagnoseserver (30), der durch eine Instanziierung eines Diagnoseserver-Funktionsbausteins (3) eines gemäß einem Verfahren der Ansprüche 1 bis 12 bereitgestellten IEC-61131-Frameworks (1) erzeugt ist; und
c) einen Diagnoseclient (6), der zur Datenkommunikation mit dem Diagnoseserver (30) ausgebildet ist.

15. Computerprogramm, umfassend Befehle, die bei der Ausführung des Programms durch einen Computer diesen veranlassen, das Verfahren nach einem der Ansprüche 1 bis 12 auszuführen.

16. Computerlesbares Speichermedium, umfassend Befehle, die bei der Ausführung durch einen Computer diesen veranlassen, das Verfahren nach einem der Ansprüche 1 bis 12 auszuführen.

17. Datenträgersignal, das das Computerprogramm nach Anspruch 15 überträgt.

## Claims

1. A computer-implemented method for providing a diagnostic functionality for an application based on a programmable logic controller, PLC, comprising the steps:
a) creating a control program (8) in at least one IEC-61131-compliant programming language for a programmable logic controller by means of an IEC-61131 framework (1), wherein the IEC-61131 framework (1) provides multiple function blocks (2) by means of which the diagnostic functionality is created in the at least one IEC-61131-compliant programming language,
wherein the multiple function blocks (2) comprise:
a1) a diagnosis server function block (3) that instantiates a diagnosis server (30) for exchanging diagnostic data with a diagnosis client (6),
a2) at least one message function block (4) that instantiates at least one message element (4a) which, upon being called of the instantiated state at least one message element (4a), writes a diagnostic message into a data exchange data structure (5a), and
a3) a structured data type (5) that provides the data exchange data structure (5a) for data exchange between the instantiated at least one message element (4a) and the instantiated diagnosis server (30).

2. The method of claim 1, wherein the application comprises a remote terminal unit, RTU, based on the programmable logic controller; and/or
wherein the diagnostic functionality for a remote terminal unit, RTU, based on the programmable logic controller is created by means of the function blocks (2); and/or
wherein the control program (8) for a programmable logic controller is created to control an RTU.

3. The method of claim 1 or 2, wherein the IEC-61131 framework (1) creates the control program (8) and the diagnostic functionality created by the multiple function blocks (2) exclusively in the at least one IEC-61131-compliant programming language.

4. The method according to any one of claims 1 to 3, wherein the IEC-61131 framework (1) automatically causes the diagnostic functionality created by the multiple function blocks (2) to arise upon creation of a control program (8) for the programmable logic controller and/or integrates it into the created control program (8).

5. The method according to any one of claims 1 to 4, wherein the diagnostic functionality provided by the multiple function blocks (2) runs in an IEC-61131 real-time runtime environment.

6. The method according to any one of claims 1 to 5, wherein by means of the at least one message function block (4), multiple message elements (4a) are configured
a) for each of which it is determined which diagnostic messages the respective message element (4a) generates in its instantiated state at which time and/or under which condition; and/or
b) wherein the multiple message elements (4a) differ from each other in that each message element (4a) detects a different predetermined diagnostic event and/or detects the predetermined diagnostic event at a different diagnostic time.

7. The method according to any one of claims 1 to 6, wherein the IEC-61131 framework (1) further provides multiple control function blocks for creating the control program for the programmable logic controller, and wherein by means of the at least one message function block (4), message elements (4a) are configured and assigned to the control function blocks such that a control function block (10a, 10b, 10c, 10n), in its instantiated state, has at least one assigned message element (4a).

8. The method according to any one of claims 1 to 7, wherein during creation of the diagnostic functionality for the application based on a programmable logic controller:
a) exactly one diagnosis server (30) is instantiated from the diagnosis server function block (3), exactly one data exchange data structure (5a) is instantiated from the structured data type (5), and at least one message element (4a), preferably multiple message elements (4a), is instantiated from the at least one message function block (4); and/or
b) the diagnosis server (30) and the at least one message element (4a) are connected to each other for data exchange by connecting the data exchange data structure (5a) as an IN-OUT variable.

9. The method according to any one of claims 1 to 8, wherein the diagnosis server (30) reads the diagnostic message from the data exchange data structure (5a), evaluates whether the diagnostic message is relevant on the basis of stored relevance conditions, and sends the diagnostic message or a processed diagnostic message created on the basis of the diagnostic message to the diagnosis client (6) if the diagnostic message is relevant.

10. The method according to any one of claims 1 to 9, wherein the diagnostic functionality is implemented as a text message system, preferably wherein the at least one message element (4a), upon detecting the predetermined diagnostic event, writes a diagnostic message as a text message into the data exchange data structure (5a).

11. The method according to any one of claims 1 to 10, wherein
a) the diagnosis server (30) uses a diagnosis channel (32) and/or a communication protocol (7) for data communication with the diagnosis client (6), which is used exclusively for data communication of diagnostic data; and/or
b) the diagnosis server (30) has a TCP/IP socket (31) for data communication with the diagnosis client (6).

12. The method according to any one of claims 1 to 11, further comprising:
providing a diagnosis client (6) that communicates data with the diagnosis server (30) instantiated from the diagnosis server function block (3), wherein the diagnosis client (6)
a) exclusively performs data communication with one or more diagnosis servers (30) in order to display diagnostic data received from the server, preferably to display the diagnostic data with timestamps and additional information;
b) does not use HTML or JAVA-based technology for displaying the diagnostic data; and/or
c) optionally displays diagnostic data from multiple remote terminal units, RTU, based on a programmable logic controller.

13. A device for data processing, comprising means for executing the method according to any one of claims 1 to 12.

14. A system for data processing, comprising:
a) a device for data processing, configured to provide the IEC-61131 framework (1) according to a method according to any one of claims 1 to 12;
b) a diagnosis server (30) that is generated by instantiation of a diagnosis server function block (3) of the IEC-61131 framework (1) provided according to a method of claims 1 to 12; and
c) a diagnosis client (6) configured to communicate data with the diagnosis server (30).

15. A computer program, comprising instructions which, when the program is executed by a computer, cause the computer to carry out the method according to any one of claims 1 to 12.

16. A computer-readable storage medium, comprising instructions which, when executed by a computer, cause the computer to perform the method according to any one of claims 1 to 12.

17. A data carrier signal that transmits the computer program of claim 15.

## Revendications

1. Procédé mis en œuvre par ordinateur pour fournir une Fonctionnalité de diagnostic pour une application basée sur un Automate programmable (SPS), comprenant les étapes suivantes :
a) l'élaboration d'un Programme de commande (8) dans au moins un Langage conforme à la norme IEC-61131 pour un Automate programmable (SPS) au moyen d'une Structure IEC-61131 (1), ladite Structure IEC-61131 (1) mettant à disposition plusieurs Blocs fonctionnels (2) grâce auxquels la Fonctionnalité de diagnostic est élaborée dans au moins un Langage conforme à la norme IEC-61131,
lesdits plusieurs Blocs fonctionnels (2) comprenant :
a1) un Bloc fonctionnel de serveur de diagnostic (3), qui instancie un Serveur de diagnostic (30) pour l'échange de données de diagnostic avec un Client de diagnostic (6),
a2) au moins un Bloc fonctionnel de messages (4), qui instancie au moins un Élément de message (4a) lequel, lors d'un appel dudit Élément de message (4a) instancié, écrit un Message de diagnostic dans une Structure de données d'échange (5a), et
a3) un Type de données structurées (5), qui met à disposition ladite Structure de données d'échange (5a) pour l'échange de données entre le ou les Élément(s) de message (4a) instancié(s) et le Serveur de diagnostic (30) instancié.

2. Procédé selon la revendication 1, dans lequel l'application comprend une Station distante (RTU) basée sur un Automate programmable (SPS) ; et/ou
dans lequel la Fonctionnalité de diagnostic pour une Station distante (RTU) basée sur un Automate programmable (SPS) est élaborée au moyen des Blocs fonctionnels (2) ; et/ou
dans lequel le Programme de commande (8) pour un Automate programmable (SPS) est élaboré en vue de la commande d'une Station distante (RTU).

3. Procédé selon la revendication 1 ou 2, dans lequel la Structure IEC-61131 (1) élabore le Programme de commande (8) et la Fonctionnalité de diagnostic créée par les plusieurs Blocs fonctionnels (2) exclusivement dans le ou les Langage(s) conforme(s) à la norme IEC-61131.

4. Procédé selon l'une quelconque des revendications 1 à 3, dans lequel la Structure IEC-61131 (1) fait automatiquement apparaître la Fonctionnalité de diagnostic créée par les plusieurs Blocs fonctionnels (2) lors de l'élaboration d'un Programme de commande (8) pour l'Automate programmable (SPS) et/ou l'intègre dans le Programme de commande (8) élaboré.

5. Procédé selon l'une quelconque des revendications 1 à 4, dans lequel la Fonctionnalité de diagnostic mise à disposition par les plusieurs Blocs fonctionnels (2) s'exécute dans un Environnement d'exécution en temps réel IEC-61131.

6. Procédé selon l'une quelconque des revendications 1 à 5, dans lequel, au moyen d'au moins un Bloc fonctionnel de messages (4), plusieurs Éléments de message (4a) sont configurés,
a) pour lesquels est spécifié quels Messages de diagnostic ledit Élément de message (4a) en état instancié génère et quand et/ou sous quelle condition ; et/ou
b) lesdits plusieurs Éléments de message (4a) se différenciant en ce que chaque Élément de message (4a) détecte un Événement de diagnostic prédéterminé différent et/ou le même Événement de diagnostic prédéterminé à un autre instant de diagnostic.

7. Procédé selon l'une quelconque des revendications 1 à 6, dans lequel la Structure IEC-61131 (1) met en outre à disposition plusieurs Blocs fonctionnels de commande pour l'élaboration du Programme de commande pour l'Automate programmable (SPS), et dans lequel, au moyen dudit au moins un Bloc fonctionnel de messages (4), des Éléments de message (4a) sont configurés et attribués aux Blocs fonctionnels de commande, de telle sorte qu'un Bloc fonctionnel de commande (10a, 10b, 10c, 10n) présente au moins un Élément de message (4a) attribué à l'état instancié.

8. Procédé selon l'une quelconque des revendications 1 à 7, dans lequel, lors de l'élaboration de la Fonctionnalité de diagnostic pour l'application basée sur un Automate programmable (SPS),
a) exactement un Serveur de diagnostic (30) issu du Bloc fonctionnel de serveur de diagnostic (3), exactement une Structure de données d'échange (5a) issue du Type de données structurées (5) et au moins un Élément de message (4a), de préférence plusieurs Éléments de message (4a), issus du ou des Bloc(s) fonctionnel(s) de messages (4) sont instanciés ; et/ou
b) le Serveur de diagnostic (30) et le ou les Élément(s) de message (4a) sont reliés l'un à l'autre pour l'échange de données par le raccordement de la Structure de données d'échange (5a) en tant que variable d'entrée-sortie (IN-OUT).

9. Procédé selon l'une quelconque des revendications 1 à 8, dans lequel le Serveur de diagnostic (30) lit le Message de diagnostic depuis la Structure de données d'échange (5a) et évalue, sur la base de conditions de pertinence mémorisées, si le Message de diagnostic est pertinent, et envoie le Message de diagnostic ou un Message de diagnostic traité, élaboré sur la base du Message de diagnostic, au Client de diagnostic (6) si le Message de diagnostic est pertinent.

10. Procédé selon l'une quelconque des revendications 1 à 9, dans lequel la Fonctionnalité de diagnostic est mise en œuvre sous forme de système de messages texte, de préférence dans lequel le ou les Élément(s) de message (4a) écrit/écrivent un Message de diagnostic en tant que message texte dans la Structure de données d'échange (5a) lors de la détection de l'Événement de diagnostic prédéterminé.

11. Procédé selon l'une quelconque des revendications 1 à 10, dans lequel
a) le Serveur de diagnostic (30) utilise, pour la communication de données avec le Client de diagnostic (6), un Canal de diagnostic (32) et/ou un Protocole de communication (7) pour la communication de données, qui est exclusivement utilisé pour la communication de données de diagnostic ; et/ou
b) le Serveur de diagnostic (30) comporte un Socket TCP/IP (31) pour la communication de données avec le Client de diagnostic (6).

12. Procédé selon l'une quelconque des revendications 1 à 11, comprenant en outre :
la mise à disposition d'un Client de diagnostic (6) qui communique des données avec le Serveur de diagnostic (30) instancié à partir du Bloc fonctionnel de serveur de diagnostic (3), ledit Client de diagnostic (6)
a) ne réalisant exclusivement qu'une communication de données avec un ou plusieurs Serveurs de diagnostic (30) afin d'afficher les données de diagnostic reçues du Serveur, de préférence afin d'afficher les données de diagnostic avec un horodatage et d'autres informations supplémentaires ;
b) n'utilisant aucune technologie basée sur HTML ou JAVA pour l'affichage des données de diagnostic ; et/ou
c) affichant, éventuellement, des données de diagnostic de plusieurs Stations distantes (RTU) basées sur un Automate programmable (SPS).

13. Dispositif de traitement de données, comprenant des moyens pour exécuter le Procédé selon l'une quelconque des revendications 1 à 12.

14. Système de traitement de données, comprenant :
a) un Dispositif de traitement de données, conçu pour fournir la Structure IEC-61131 (1) conformément à un Procédé selon l'une quelconque des revendications 1 à 12 ;
b) un Serveur de diagnostic (30), qui est généré par l'instanciation d'un Bloc fonctionnel de serveur de diagnostic (3) d'une Structure IEC-61131 (1) mise à disposition selon un Procédé selon l'une quelconque des revendications 1 à 12 ; et
c) un Client de diagnostic (6), conçu pour communiquer des données avec le Serveur de diagnostic (30).

15. Programme informatique, comprenant des instructions qui, lors de l'exécution dudit programme par un ordinateur, amènent ce dernier à exécuter le Procédé selon l'une quelconque des revendications 1 à 12.

16. Support d'enregistrement lisible par ordinateur, comprenant des instructions qui, lors de leur exécution par un ordinateur, amènent ce dernier à exécuter le Procédé selon l'une quelconque des revendications 1 à 12.

17. Signal de support de données, qui transmet le Programme informatique selon la revendication 15.
